# EUROPÄISCHE PATENTSCHRIFT

(11) **EP 2 224 143 B1**
(45) Veröffentlichungstag und Bekanntmachung des Hinweises auf die Patenterteilung: **15.04.2015**
(21) Anmeldenummer: 10001922.3
(22) Anmeldetag: 25.02.2010
(51) Int. Cl.: F16B 39/30

(54) **Mutter, Schraubverbindung, Profilverbindung sowie Verfahren zum Herstellen einer Mutter**
Nut, screw connection, profile connection and method for producing a nut
Ecrou, raccordement de vis, connexion de profilé, ainsi que procédé de fabrication d'un écrou

(30) Priorität: 26.02.2009 DE 102009010390
(43) Veröffentlichungstag der Anmeldung: 01.09.2010
(73) Patentinhaber: FH-PAGE Profilverbindungstechnik GmbH, 78554 Aldingen (DE)
(72) Erfinder: Holscher, Winfried K W, 78234 Engen (DE)
(74) Vertreter: Wagner, Kilian

(56) Entgegenhaltungen:
- WO-A1-02/053926
- JP-U- 63 201 203
- US-A- 3 240 248

## Beschreibung

Die vorliegende Erfindung betrifft eine Mutter, insbesondere eine Hammermutter, für eine Schraubverbindung, mit einem Körper, aufweisend eine Durchgangsöffnung mit Innengewinde, welches mehrere, von jeweils zwei benachbarten Gewindezähnen begrenzte Gewindegangwindungen aufweist und mit Mitteln zum Erzeugen eines Haltemomentes beim Verschrauben einer Schraube mit der Mutter. Ferner betrifft die Erfindung eine Profilverbindung sowie ein Verfahren zum Herstellen einer Mutter.

Aus der DE 37 43 010 C2 ist ein Außengewindeteil bekannt, bei welchem die Gewindespitzen vollumfänglich radial nach innen abgeflacht sind, wodurch Gewindezahnmaterial zum Erzeugen eines Haltemoments in die Gewindegänge verdrängt ist.

Aus der DE 10 2005 050 919 A1 ist eine Sicherungsmutter bekannt, bei der ein Sicherungsmittel zum Erzeugen eines Haltemomentes zwischen Mutter und Schraube von einer sogenannten Sicherungsgewindegangwindung gebildet ist, die ein im Vergleich zu der überwiegenden Anzahl von Windungen verändertes (verengtes) Querschnittsprofil aufweist. Die bekannte Sicherungsmutter scheint im Hinblick auf eine vereinfachte Herstellbarkeit verbesserungswürdig.

Aus der WO 02/053926 A1 ist eine Mutter mit einer sich in axialer Richtung erstreckenden Kerbe bekannt. Diese Kerbe befindet sich mit Axialabstand zu den axialen Enden einer Durchgangsöffnung der Mutter. Die Kerbe wird erzeugt, indem in radialer Richtung Druck auf die Gewindezähne ausgeübt wird, sodass sich diese in zwei einander entgegengesetzte Axialrichtungen verbreitern. Das Einbringen der Kerbe ist vergleichsweise aufwendig.

Aus der JP 63-201203 ist eine Mutter mit den Merkmalen des Oberbegriffs von Anspruch 1 bekannt, in der axial verlaufende Einformungen erzeugt werden, was zu in Fig. 2 der Druckschrift ersichtichen seitlichen Aufwerfungen der Gewindezähne führt.

Aus der US 3,240,248 ist eine Mutter bekannt, bei der axial verlaufende Einformungen vor dem Einbringen des Gewindes erzeugt werden.

Bei der Herstellung von Schraubenverbindungen zwischen einer Schraube und einer Hammermutter zum aneinander Fixieren von Aluminiumprofilen besteht das Problem, dass die Hammermutter beim Einschraubvorgang der Schraube in das Innengewinde der Hammermutter um 90° verschwenkt werden muss, um nach dem Einsetzen der Hammermutter in eine Profillängsnut ihre Fixierposition zu erreichen. Hierzu ist es notwendig, dass die Hammermutter beim Verschrauben mit der Schraube in Umfangsrichtung mitgenommen wird. Dies wiederum erfordert die Realisierung eines Haltemomentes zwischen der Schraube und der Hammermutter, was in der Praxis dadurch realisiert wird, dass der endseitige Gewindezahn des Innengewindes der Hammermutter in Richtung des axial benachbarten Gewindezahns verformt wird, um so die letzte Gewindegangwindung des Innengewindes der Hammermutter zu verengen. Diese Vorgehensweise hat sich bewährt, ist jedoch mit dem Nachteil verbunden, dass die Schraube mindestens bis zum Erreichen der letzten Gewindegangwindung der Hammermutter in diese hineinverschraubt werden muss, um ein Mitnehmen in Umfangsrichtung zu gewährleisten. Sollen für bestimmte Anwendungszwecke jedoch vergleichsweise kurze Schrauben verwendet werden, die nur ein Stück weit in das Innengewinde der Hammermutter einschraubbar sind, wird kein Haltemoment realisiert, und die Hammermutter muss händisch in Umfangsrichtung verdreht werden, was in der Praxis nur äußerst aufwendig realisierbar ist.

Der Erfindung liegt daher die Aufgabe zugrunde, eine Mutter, insbesondere eine Hammermutter vorzuschlagen, bei der auch ohne die Notwendigkeit des vollständigen Einschraubens einer Schraube in das Innengewinde der Mutter ein Haltemoment zwischen Mutter und Schraube realisierbar ist. Bevorzugt soll die Axialposition, also die Einschraubtiefe, ab der das Haltemoment wirkt, bei der Herstellung der Mutter einstellbar, d.h. definiert vorgebbar sein. Ferner besteht die Aufgabe darin, eine Schraubverbindung mit einer entsprechend optimierten Mutter sowie eine Profilverbindung mit einer entsprechend verbesserten Schraubverbindung anzugeben. Darüber hinaus besteht die Aufgabe darin, ein Verfahren zum Herstellen einer derartigen Mutter anzugeben.

Diese Aufgabe wird bei einer gattungsgemäßen Mutter dadurch gelöst, dass die Mittel mindestens eine, sich in axialer Richtung erstreckende, mehrere Gewindegangwindungen miteinander verbindende und mehrere Gewindezähne axial durchsetzende Kerbe umfassen, die Gewindezahnmaterial in zu den Gewindezähnen benachbarte Gewindegangwindungen (Sicherungsgewindegangwindungen) zum Erzeugen des Haltemomentes (Schleppmomentes) verdrängend ausgebildet ist. Hinsichtlich der Schraubverbindung wird die Aufgabe durch den Einsatz einer nach dem Konzept der Erfindung ausgebildeten Mutter gelöst und hinsichtlich der Profilverbindung durch den Einsatz einer Schraubverbindung mit einer nach dem Konzept der Erfindung ausgebildeten Mutter. Hinsichtlich des Verfahrens wird die Aufgabe dadurch gelöst, dass nach dem Herstellen eines Mutterkörpers mit Durchgangsöffnung mit Innengewinde mindestens eine sich in axialer Richtung erstreckende Kerbe in den Körper eingeformt wird, die mehrere, vorzugsweise nicht sämtliche, Gewindegänge in axialer Richtung miteinander verbindet und folglich mehrere Gewindezähne axial durchsetzt, derart, dass Gewindezahnmaterial der von der Kerbe durchsetzten Gewindegangwindungen in axialer Richtung in die jeweils benachbarte Gewindegangwindung verdrängt wird und dort beim Verschrauben mit einer Schraube für die Entstehung eines Haltemomentes (Bremsmoment, Sicherungsmoment), d.h. einen (erhöhten) Kraftschluss zwischen der Schraube und einem Innengewindeelement verantwortlich ist. Bei der Sicherungsmutter handelt es sich bevorzugt um eine Schleppmutter, insbesondere um eine Hammermutter oder einen sonstigen Nutstein, zum aneinander Fixieren von Metallprofilen, die in Umfangsrichtung mit einer Fixierschraube mit schleppbar ist. Auch ist es möglich, nach dem Konzept der Erfindung ausgebildete Sicherungsmuttern für den Transport verliersicher vorzumontieren.

Vorteilhafte Weiterbildungen der Erfindung sind in den Unteransprüchen angegeben.

Um zu erreichen, dass ein Haltemoment zwischen einer Schraube und einer Mutter bereits vor Erreichen der in axialer Richtung (d.h. in Einschraubrichtung) letzten Gewindegangwindung wirkt, schlägt die Erfindung vor, in das Innengewinde der Mutter mindestens eine Kerbe, vorzugsweise mehrere Kerben, einzubringen, die sich in axialer Richtung erstrecken, also parallel zu einer Längsmittelachse der das Innengewinde aufweisenden Durchgangsöffnung angeordnet sind. Dabei ist die mindestens eine Kerbe derart beschaffen, dass sie randseitiges (innenumfangseitiges) Gewindezahnmaterial (insbesondere der Gewindezahnspitzen) in axialer Richtung verdrängt und zwar in den jeweils zu einem Gewindezahn benachbarten Gewindegangwindung und dort zu einer Materialanhäufung führt, welche die entsprechende Gewindegangwindung als Sicherungsgewindegangwindung mit einem örtlich verengten Querschnitt ausbildet, welcher wiederum für das Entstehen eines Haltemomentes (Bremsmomentes, Sicherungsmomentes) sorgt, wenn in das Innengewinde, genauer in mindestens einer der so gebildeten Sicherungsgewindegangwindungen des Innengewindes, eine Schraube, d.h. ein Außengewindeelement, eingeschraubt wird. Der wesentliche Vorteil einer nach dem Konzept der Erfindung ausgebildeten Mutter besteht darin, dass die Sicherungsmittel, sprich die mindestens eine Kerbe, auf einfache Weise eingebracht werden können, indem ein Kerbwerkzeug, beispielsweise ein herkömmlicher Inbusschlüssel, aus axialer Richtung, das Innengewinde entlang mindestens einer axialen Linie verformend eingeführt wird. Dabei bestimmt die axiale Einführtiefe die Axialposition, ab der das Haltemoment zwischen Schraube und Mutter zu wirken beginnt. Bevorzugt erstreckt sich die Kerbe - wie später noch erläutert werden wird - nicht über die gesamte Axialerstreckung des Gewindes, sondern nur über einen Teilabschnitt und wird von dem, von der Einführseite der Schraube abgewandten Ende der Durchgangsöffnung her, eingebracht. Im Vergleich zu sonstigen bekannten Sicherungsmuttern lässt sich also auf sehr einfache Weise ein Haltemoment durch das Einbringen mindestens einer axialen Kerbe realisieren - auf weitere, komplexe Verformvorgänge, die Gewindezähne des Innengewindes in zwei voneinander entgegengesetzte Axialrichtungen zu verformen, kann verzichtet werden. Eine nach dem Konzept der Erfindung ausgebildete Mutter hat den Vorteil, dass diese auch, insbesondere beim Herstellen von Profilverbindungen, nicht nur mit vergleichsweise langen Schrauben verwendet werden muss, die das Innengewinde vollständig durchsetzen, sondern auch mit vergleichsweise kurzen Schrauben verwendet werden kann, die nur ein Stück weit in das Innengewinde axial hineinragen, nämlich bis zu einer Tiefe, bis zu der die Kerbe, ein Haltemoment erzeugend, eingeformt ist. Im Hinblick auf die Radialerstreckung der mindestens einen Kerbe gibt es unterschiedliche Möglichkeiten. Gemäß einer ersten Ausführungsform entspricht die Radialerstreckung mindestens der Gewindegangtiefe. Gemäß einer bevorzugten zweiten Alternative ist die Radialerstreckung geringer als die Gewindegangtiefe, was dazu führt, dass die Kerbe mehrfach von Gewindegangwindungen unterbrochen ausgebildet ist.

In Weiterbildung der Erfindung ist mit Vorteil vorgesehen, dass die Kerbe eine möglichst geringe Umfangserstreckung, von vorzugsweise weniger als 5°, weiter bevorzugt von weniger als 3°, noch weiter bevorzugt von weniger als 2° aufweist, also in erster Näherung linienförmig ausgebildet ist.

Wie eingangs bereits angedeutet, ist eine Ausführungsform besonders bevorzugt, bei der sich die Kerbe in axialer Richtung nicht durchgehend erstreckt, sondern vor dem Erreichen eines der beiden Enden, vorzugsweise vor dem vorderen Ende, der Durchgangsöffnungen endet, um somit das Haltemoment erst ab einer definierten Einschraubtiefe wirken zu lassen. Selbstverständlich ist auch eine Ausführungsform realisierbar, bei der die mindestens eine Kerbe in axialer Richtung durchgehend ausgebildet ist, um ein Haltemoment bereits von dem ersten Gewindegang an wirken zu lassen.

Grundsätzlich reicht eine einzige sich in axialer Richtung erstreckende Kerbe zur Realisierung eines Haltemomentes aus. Zur Realisierung größerer Haltemomente ist es jedoch bevorzugt, mehr als nur eine Kerbe vorzusehen, wobei die mehreren Kerben parallel zueinander verlaufen und weiter bevorzugt, zumindest näherungsweise, die gleiche Axialerstreckung aufweisen. Im Hinblick auf eine möglichst einfache Ausbildung des Kerbwerkzeuges ist eine Ausführungsform bevorzugt, bei der insgesamt sechs Kerben vorgesehen sind, da eine derartige Ausführungsform bei Bedarf mit einem, ggf. leicht modifizierten, Standard-Inbusschlüssel als Kerbwerkzeug realisiert werden kann, wobei dem Sechskantprofil des Inbusschlüssels gemäß einer besonders bevorzugten Ausführungsform ein, insbesondere konischer, Zentrierabschnitt vorgeordnet ist, der eine exakte Positionierung der Kerbe in radialer Richtung gewährleistet.

Besonders zweckmäßig ist es, wenn die mehreren Kerben gleichmäßig in Umfangsrichtung verteilt angeordnet sind.

Die Erfindung führt auch auf eine Schraubverbindung, umfassend eine Schraube, beispielsweise eine Kopfschraube oder eine (kopflose) Stiftschraube, deren Außengewinde mit dem Innengewinde der Mutter verschraubt ist, wobei die Schraube bevorzugt soweit in die Mutter eingeschraubt ist, dass sie zumindest eine erste Sicherungsgewindegangwindung erreicht, damit ein Haltemoment zwischen der Schraube und der Mutter realisiert ist, das bevorzugt zumindest so groß gewählt ist, dass die vorzugsweise als Hammermutter ausgebildete Mutter beim weiteren Verdrehen der Schraube bis zum Anschlagen der Mutter, insbesondere an der Seitenwand einer Profillängsnut, in Umfangsrichtung mitgenommen wird.

Darüber hinaus führt die Erfindung auf eine Profilverbindung mit mindestens zwei Profilen, die über eine nach dem Konzept der Erfindung ausgebildete Schraubverbindung miteinander verbunden sind, wobei die Mutter bevorzugt als ein in einer Profillängsnut aufgenommenen Hammermutter ausgebildet ist.

Auch führt die Erfindung auf ein Verfahren zum Herstellen einer zuvor beschriebenen, vorzugsweise als Hammermutter bzw. Nutstein ausgebildeten, Mutter, wobei zunächst der (Mutter-)Körper mit einer ein Innengewinde aufweisenden Durchgangsöffnung hergestellt wird. Dabei ist es besonders bevorzugt, wenn dies durch Pressen, insbesondere Kaltfließpressen, eines entsprechend geeigneten Stahls erfolgt. Nach dem Herstellen des Körpers mit Durchgangsöffnung und Innengewinde wird dann mindestens eine sich axial erstreckende Kerbe in das Innengewinde eingebracht, die in axialer Richtung betrachtet mehrere Gewindegangwindungen miteinander verbindet und folglich mehrere Gewindezähne axial durchsetzt, wobei das Einformen derart erfolgt, dass beim Einbringen Gewindezahnmaterial in axialer Richtung, vorzugsweise entgegen der Einschraubrichtung, verdrängt wird, in die jeweils zu den entsprechenden Gewindezähnen benachbarten Gewindegangwindungen und dort zu einer Materialanhäufung führt, die wiederum beim Verschrauben der Mutter mit einer Schraube zu einem Haltemoment bzw. Bremsmoment oder Sicherungsmoment führt.

Besonders bevorzugt ist eine Ausführungsform des Verfahrens, bei der zum Erzeugen der Kerbe ein Kerbwerkzeug eingesetzt wird, das axial relativ zu dem (Mutter-)Körper verstellt wird, derart, dass das Kerbwerkzeug von einem axialen Ende der Durchgangsöffnung in Richtung des anderen Endes eingeführt wird, vorzugsweise bis zu einer Axialposition vor Erreichen des anderen Endes, wobei sich beim Einführen das Kerbwerkzeug axial in das Innengewinde einformt. Bevorzugt weist das Kerbwerkzeug hierzu mindestens eine, nicht zwangsläufig radial spitz zulaufende, Kerbkante auf.

Besonders zweckmäßig ist eine Ausführungsform des Werkzeugs, bei der der mindestens einen Kerbkante eine als Zentrierkonus ausgebildete Zentrierung zugeordnet ist, die für eine gleichmäßige Beabstandung der Kerben von der Längsmittelachse der Durchgangsöffnung sorgt.

Im einfachsten Fall handelt es sich bei dem Kerbwerkzeug um einen Sechskant, dem bevorzugt axial vor dem Sechskantprofil eine Zentrierung, insbesondere in Form eines Konus, zugeordnet ist, wobei noch weiter bevorzugt axial vor der Zentrierung ein durchmesserreduzierter Abschnitt angeordnet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
Fig. 1: eine ausschnittsweise, unvollständige Darstellung einer Mutter mit in axialer Richtung verlaufender, das Innengewinde der Mutter durchsetzender, linienförmiger Kerbe,
Fig. 2: eine abgewickelte Darstellung des Innengewindes mit in dem gezeigten Ausführungsbeispiel insgesamt fünf parallelen Kerben,
Fig. 3: eine Draufsicht auf eine als Hammermutter ausgebildete Mutter mit Durchgangsöffnung, Innengewinde und sechs gleichmäßig über den Innenumfang verteilt angeordneten, ein Bremsmoment erzeugenden Kerben,
Fig. 4: in einer unvollständigen, ausschnittsweisen, durchschnittenen Darstellung eine Schraubverbindung, umfassend eine Schraube und eine Mutter mit Sicherungsgewindegangwindungen, und
Fig. 5: in einer schematischen Darstellung ein Kerbwerkzeug zur Herstellung von Innengewindekerben.

In den Figuren sind gleiche Elemente und Elemente mit der gleichen Funktion mit den gleichen Bezugszeichen gekennzeichnet.

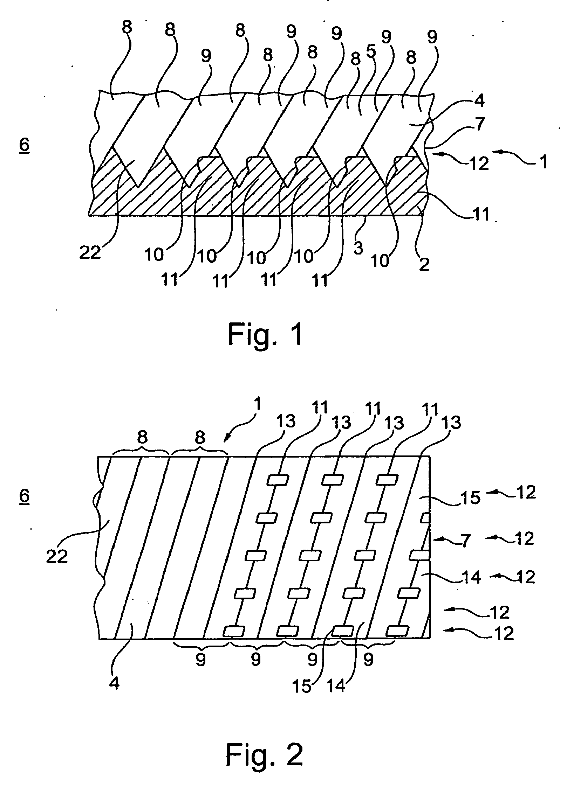

In Fig. 1 ist in einer ausschnittsweisen, geschnittenen Darstellung eine Mutter 1 (Innengewindemutter) gezeigt. Die Mutter 1 umfasst einen Körper 2, der an seinem Außenumfang Schlüsselflächen 3 aufweist. In dem Körper 2 ist eine zentrische Durchgangsöffnung 4 mit Innengewinde 5 realisiert. In dem gezeigten Ausführungsbeispiel handelt es sich um ein metrisches Innengewinde, wobei selbstverständlich auch andere Gewindearten realisiert werden können.

Die Durchgangsöffnung 4 weist ein erstes, sich in der Zeichnungsebene links befindliches, nicht dargestelltes, Ende 6 sowie ein davon abgewandtes zweites Ende 7 auf. Die Mutter 1 ist so ausgelegt, dass von dem ersten Ende 6 her eine Schraube in die Durchgangsöffnung 4, genauer das Innengewinde 5, eindrehbar ist.

Die Mutter 1 weist einen Gewindegang 22 mit einer Vielzahl von Gewindegangwindungen 8 auf, wobei die mit dem Bezugszeichen 9 gekennzeichneten Gewindegangwindungen als Sicherungsgewindegangwindungen ausgebildet sind, die ein Haltemoment zwischen einer nicht dargestellten Schraube und dem Innengewinde 5 realisieren.

Dieses Haltemoment ist darauf zurückzuführen, dass in die mit dem Bezugszeichen 9 gekennzeichneten Gewindegangwindungen Gewindezahnmaterial 10 von Gewindezähnen 11 axial hineinverdrängt ist und zwar entgegen einer Einschraubrichtung entlang einer Kerbe 12, die sich ausgehend von dem zweiten Ende 7 in axialer Richtung erstreckt und vor Erreichen des ersten Endes 6 endet, sodass das Haltemoment erst ab der ersten (Sicherungs)Gewindegangwindung 9 zu wirken beginnt.

Die Kerbe 12 ist im Querschnitt im Wesentlichen dreieckig konturiert und durchsetzt die jeweils rechts einer (Sicherungs-)Gewindegangwindung 9 angeordneten Gewindezähne in axialer Richtung, derart, dass das Gewindezahnmaterial 10 der "Zahnspitzen" der Gewindezähne 10 nach in der Zeichnungsebene links, d.h. entgegen der Einschraubrichtung, in die Gewindegangwindungen 9 hineinverdrängt wird.

Die Umfangserstreckung und die Tiefe der Kerbe 12 ist so zu bemessen, dass die Schraube beim Einschrauben in die Gewindegangwindung nicht vollständig blockiert, sondern mit entsprechendem Kraftaufwand in die Gewindegangwindungen 9 unter Wirkung eines Haltemoments (Bremsmarke) hinein verschraubt werden kann. Wie sich aus Fig. 1 ergibt, beträgt die Tiefe der Kerbe 12 etwa ein Fünftel der Höhenerstreckung der Gewindezähne 11.

In Fig. 2 ist das Innengewinde 5 einer Mutter 1 in einer abgewickelten Darstellung gezeigt. Zu erkennen ist der Gewindegang 22 mit seinen Sicherungsgewindegangwindungen 9 sowie die axial daran anschließenden (normalen), d.h. ein übliches Gewindegangprofil aufweisenden, Gewindegangwindungen 8. In der axialen Mitte der Gewindegangwindungen 8, 9 befindet sich jeweils eine Gewindeganggrundlinie 13.

Zu erkennen ist aus Fig. 2, dass jeweils zwei Flanken 14, 15 der Gewindezähne 11 axial durchsetzt sind von mehreren, parallelen, sich in axialer Richtung erstreckenden Kerben 12, welche Gewindezahnmaterial der Gewindezähne 11 verdrängen auf die jeweilige Flankenseite 15 und somit für eine Materialanhäufung in die entsprechenden Gewindegangwindungen 9 sorgen. Die Kerben 12 sind in Umfangsrichtung unterbrochen von den Gewindegangwindungen 9.

Im gezeigten Ausführungsbeispiel sind insgesamt fünf, sich in axialer Richtung erstreckende, Kerben 12 vorgesehen, wobei auch andere Anzahlen von Kerben 12 vorgesehen werden können, insbesondere insgesamt sechs Kerben 12.

Wie auch bei dem Ausführungsbeispiel gemäß Fig. 1 erstrecken sich die Kerben 12 ausgehend von dem zweiten Ende 7 der Mutter 1 in axialer Richtung und enden mit (deutlichem) Axialabstand vor dem ersten, nicht dargestellten, Ende 6 der Durchgangsöffnung 4.

Wie sich aus den Fig. 1 und 2 ergibt, verbinden die Kerben 12 die (Sicherungs-) Gewindegangwindungen 9 und ragen axial nicht hinein bis in die (normalen) Gewindegangwindungen 8.

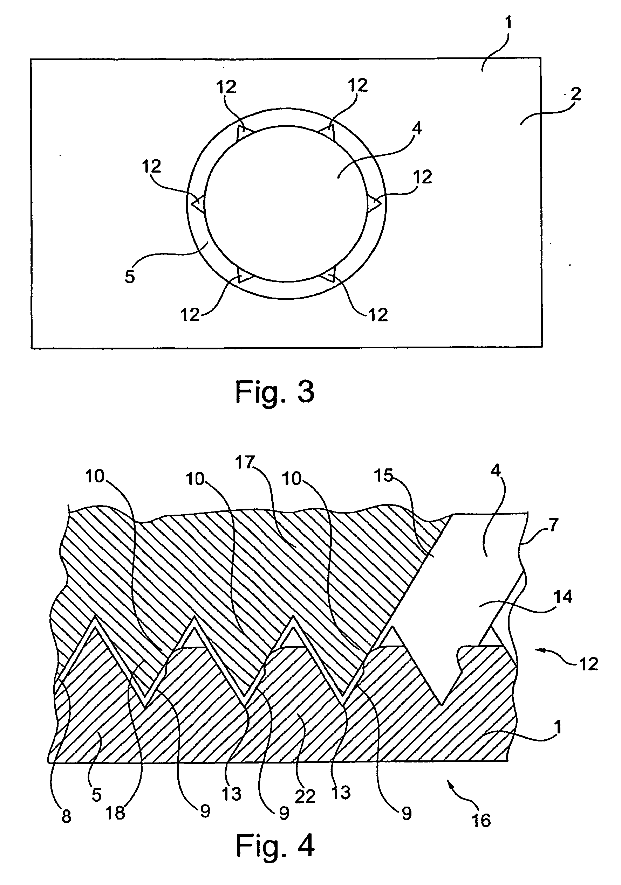

Fig. 3 zeigt eine als Hammermutter ausgebildete Mutter 1 mit einem Körper 2 in einer Draufsicht. Zu erkennen ist die Durchgangsöffnung 4 mit schematisch angedeutetem Innengewinde 5, in welches insgesamt sechs gleichmäßig über den Innenumfang verteilte Kerben 12 eingebracht sind, aus denen eine Materialanhäufung in den (Sicherungs-)Gewindegangwindungen resultiert.

Wird eine nicht dargestellte Schraube aus der Zeichnungsebene heraus in die Durchgangsöffnung 4, d.h. von unten her, eingeschraubt, wird die Mutter 1 in Umfangsrichtung mitgenommen, sobald das Außengewinde der Schraube eine Sicherungsgewindegangwindung erreicht, d.h. eine Windung, in die die Kerben 12 axial hineinragen.

In Fig. 4 ist eine Schraubverbindung 16, umfassend eine in der Art wie in Fig. 1 dargestellt ausgebildete Mutter 1 und eine Schraube 17 (Außengewindeelement) gezeigt. Zu erkennen ist, dass ein Außengewinde 18 der Schraube 17 mit dem Innengewinde 5 der Mutter 1 verschraubt ist und zwar in axialer Richtung soweit, dass das Außengewinde 18 in (Sicherungs-)Gewindegangwindungen 9 eingreift, die über eine Kerbe 12 axial miteinander verbunden sind. Zu erkennen ist die jeweilige Materialanhäufung 10 innerhalb der (Sicherungs-) Gewindegangwindungen 9, die für eine Verengung dieser Gewindegangwindungen 9 und damit für ein Haltemoment Sorge tragen. Die Kerbe 12 ist vom zweiten Ende 7 der Durchgangsöffnung 4 in die Mutter 1 eingebracht.

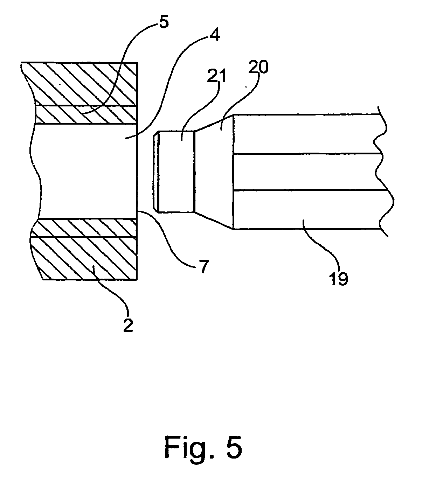

Fig. 5 zeigt einen Verfahrensschritt bei der Herstellung einer Mutter 1. Zu erkennen ist eine bis auf Kerben fertige Mutter mit einem Körper 2, einer Durchgangsöffnung 4 mit Innengewinde 5. Von einem zweiten Ende 7 her wird nun ein Kerbwerkzeug 19 in die Durchgangsöffnung 4 eingebracht, sodass die beispielsweise in Fig. 2 gezeigten Kerben 12 innerhalb des Innengewindes 5 entstehen. Bei dem Kerbwerkzeug 19 handelt es sich im Wesentlichen um einen Sechskant mit in einem Axialabschnitt sechseckigen Außenumfang. Axial diesem Axialabschnitt vorgeordnet ist eine als Konus ausgebildete Zentrierung 20, die wiederum axial übergeht in einen durchmesserreduzierten Abschnitt 21, dessen Außendurchmesser bevorzugt maximal dem minimalen Innendurchmesser der Durchgangsöffnung 4 entspricht.

Bevorzugt wird das Kerbwerkzeug 19 nur soweit axial relativ zu dem Körper 2 verstellt, dass die im Innengewinde 5 resultierenden Kerben nicht die gesamte Durchgangsöffnung 4 durchsetzen, sondern mit Axialabstand zu dem von dem zweiten Ende 7 abgewandten ersten Ende enden. Die Einpresstiefe des Kerbwerkzeugs 19 in die Durchgangsöffnung 4 definiert dabei die Einschraubtiefe (eingeschraubt wird von dem ersten Ende 6 her), ab der ein Haltemoment zu wirken beginnt.

## Patentansprüche

1. Mutter, insbesondere Hammermutter, für eine Schraubverbindung (16), mit einem Körper (2), aufweisend eine ein erstes Ende (6) und ein zweites Ende (7) aufweisende Durchgangsöffnung (4) mit Innengewinde (5), welches mehrere, von jeweils zwei axial benachbarten Gewindezähnen (11) begrenzte Gewindegangwindungen (9) aufweist, und mit Mitteln zum Erzeugen eines Haltemomentes beim Verschrauben einer Schraube (17) mit der Mutter (1), wobei die Mittel mindestens eine sich in axialer Richtung erstreckende, mehrere der Gewindegangwindungen (9) miteinander verbindende und mehrere Gewindezähne (11) axial durchsetzende Kerbe (12) umfassen, die Gewindezahnmaterial (10) in zu den Gewindezähnen (11) benachbarte Gewindegangwindungen (9), zum Erzeugen des Haltemomentes, verdrängend ausgebildet ist,
**dadurch gekennzeichnet,**
**dass** die Kerbe (12) durch axiales Hineinverstellen eines Kerbwerkzeugs (19) in die Durchgangsöffnung (4) erzeugt ist und dadurch das Gewindezahnmaterial (10) axial verdrängt ist.

2. Mutter nach Anspruch 1,
**dadurch gekennzeichnet, dass** die Kerbe (12) zumindest näherungsweise linienförmig ist.

3. Mutter nach einem der Ansprüche 1 oder 2,
**dadurch gekennzeichnet, dass** die Kerbe (12) sich von dem zweiten Ende (7) der Durchgangsöffnung (4) nur bis zu einer Axialposition vor dem von dem zweiten Ende (7) abgewandten ersten Ende (6) der Durchgangsöffnung (4) erstreckt.

4. Mutter nach einem der vorhergehenden Ansprüche,
**dadurch gekennzeichnet, dass** mehrere, insbesondere sechs, parallel verlaufende Kerben (12), vorzugsweise mit der gleichen Axialerstreckung, vorgesehen sind.

5. Mutter nach Anspruch 4,
**dadurch gekennzeichnet, dass** die Kerben (12) gleichmäßig in Umfangsrichtung verteilt angeordnet sind.

6. Schraubverbindung (16), umfassend eine Schraube (17), die mit einer Mutter (1) nach einem der vorhergehenden Ansprüche verschraubt ist.

7. Profilverbindung umfassend mindestens zwei Profile, insbesondere aus einer Leichtmetalllegierung, die aneinander mit einer Schraubverbindung (16) nach Anspruch 6 festgelegt sind.

8. Verfahren zum Herstellen einer Mutter (1) nach einem der vorhergehenden Ansprüche, wobei zunächst ein Körper (2) mit einer Durchgangsöffnung (4) mit Innengewinde (5), vorzugsweise durch Pressen, insbesondere durch Kaltfließpressen, hergestellt wird, wobei anschließend mindestens eine sich in axialer Richtung erstreckende, mehrere der Gewindegangwindungen (9) miteinander verbindende und mehrere Gewindezähne (11) axial durchsetzende Kerbe (12) eingeformt wird, derart, dass Gewindezahnmaterial (10) in zu den Gewindezähnen (11) benachbarte Gewindegangwindungen (9), zum Erzeugen des Haltemomentes, verdrängt wird,
**dadurch gekennzeichnet,**
**dass** zum Erzeugen der Kerbe (12) ein Kerbwerkzeug (19) axial von einem zweiten Ende (7) der Durchgangsöffnung (4) her in diese axial hinein verstellt und dadurch das Gewindezahnmaterial (10) axial verdrängt wird.

9. Verfahren nach Anspruch 8,
**dadurch gekennzeichnet,**
**dass** das Kerbwerkzeug (19) mindestens eine Kerbkante aufweist.

10. Verfahren nach Anspruch 9,
**dadurch gekennzeichnet, dass** ein Kerbwerkzeug (19) eingesetzt wird, bei dem axial vor der Kerbkante eine, vorzugsweise als Konus ausgebildete, Zentrierung (20) angeordnet ist.

11. Verfahren nach einem der Ansprüche 9 oder 10,
**dadurch gekennzeichnet, dass** ein als Sechskant ausgebildetes Kerbwerkzeug (19) zum Erzeugen von sechs gleichmäßig über den Umfang verteilt angeordneten Kerben (12) eingesetzt wird.

## Claims

1. A nut, particularly a hammer nut, for a screw Connection (16), having a body (2), having a through opening (4), having a first end (6) and a second end (7), with an internal thread (5), which has a plurality of thread windings (9) delimited by two axially adjacent thread teeth (11) in each case, and having means for creating a holding torque when screwing a bolt (17) to the nut (1), wherein the means comprise at least one notch (12) extending in the axial direction, connecting a plurality of the thread windings (9) to one another and axially penetrating a plurality of thread teeth (11), which notch is constructed such that it displaces thread tooth material (10) into thread windings (9) adjacent to the thread teeth (11) to create the holding torque,
**characterised**
**in that** the notch (12) is created by axial inward adjustment of a notching tool (19) into the through opening (4) and as a result the thread tooth material (10) is axially displaced.

2. The nut according to Claim 1,
**characterised in that** the notch (12) is at least approximately linear.

3. The nut according to one of Claims 1 or 2,
**characterised in that** the notch (12) extends from the second end (7) of the through opening (4) only as far as an axial position in front of the first end (6) of the through opening (4) facing away from the second end (7).

4. The nut according to one of the preceding claims,
**characterised in that** a plurality of, in particular six, parallel-running notches (12), preferably with the same axial extent, are provided.

5. The nut according to Claim 4,
**characterised in that** the notches (12) are arranged in an evenly distributed manner in the circumferential direction.

6. A screw connection (16), comprising a bolt (17), which is screwed to a nut (1) according to one of the preceding claims.

7. A profile connection comprising at least two profiles, particularly made from a lightweight metal alloy, which are fixed to one another using a screw connection (16) according to Claim 6.

8. A method for producing a nut (1) according to one of the preceding claims, wherein initially a body (2) having a through opening (4) with internal thread (5) is produced, preferably by pressing, particularly by cold extrusion, wherein at least one notch (12) extending in the axial direction, connecting a plurality of the thread windings (9) to one another and axially penetrating a plurality of thread teeth (11) is subsequently formed in such a manner that thread tooth material (10) is displaced into thread windings (9) adjacent to the thread teeth (11), to create the holding torque, **characterised**
**in that**, to create the notch (12), a notching tool (19) is axially inwardly adjusted from a second end (7) of the through opening (4) axially into the same and as a result, the thread tooth material (10) is axially displaced.

9. The method according to Claim 8,
**characterised in that** the notching tool (19) has at least one notching edge.

10. The method according to Claim 9,
**characterised in that** a notching tool (19) is used, in which a centring device (20), which is preferably constructed as a cone, is arranged axially in front of the notching edge.

11. The method according to one of Claims 9 or 10,
**characterised in that** a notching tool (19), which is constructed as a hexagon, is used for creating six notches (12) distributed evenly over the circumference.

## Revendications

1. Ecrou, en particulier écrou marteau, pour un assemblage vissé (16), avec un corps (2), qui présente une ouverture de passage (4) doté d'un filetage intérieur (5) et présentant une première extrémité (6) et une deuxième extrémité (7), qui présente plusieurs spires de filet (9) limitées chacune par deux crêtes de filet (11) axialement voisines, et avec des moyens pour produire un couple de maintien lors du vissage d'une vis (17) avec l'écrou (1), dans lequel les moyens comprennent au moins une entaille (12) s'étendant en direction axiale, reliant l'une à l'autre plusieurs spires de filet (9) et traversant axialement plusieurs crêtes de filet (11), qui est réalisée en refoulant de la matière de crête de filet (10) dans des spires de filet (9) proches des crêtes de filet (11), pour produire le couple de maintien, **caractérisé en ce que** l'entaille (12) est produite par poussée axiale d'un outil d'entaillage (19) dans l'ouverture de passage (4) et **en ce que** la matière de crête de filet (10) est ainsi refoulée axialement.

2. Ecrou selon la revendication 1, **caractérisé en ce que** l'entaille (12) est au moins approximativement linéaire.

3. Ecrou selon une des revendications 1 ou 2, **caractérisé en ce que** l'entaille (12) s'étend depuis la deuxième extrémité (7) de l'ouverture de passage (4) uniquement jusqu'à une position axiale avant la première extrémité (6) de l'ouverture de passage (4) opposée à la deuxième extrémité (7).

4. Ecrou selon l'une quelconque des revendications précédentes, **caractérisé en ce qu'**il est prévu plusieurs, en particulier six, entailles (12) orientées parallèlement, de préférence avec la même extension axiale.

5. Ecrou selon la revendication 4, **caractérisé en ce que** les entailles (12) sont disposées avec une répartition uniforme en direction périphérique.

6. Assemblage vissé (16), comprenant une vis (17), qui est vissée avec un écrou (1) selon l'une quelconque des revendications précédentes.

7. Connexion de profilés, comprenant au moins deux profilés, en particulier en un alliage de métal léger, qui sont fixés l'un à l'autre avec un assemblage vissé (16) selon la revendication 6.

8. Procédé de fabrication d'un écrou (1) selon l'une quelconque des revendications précédentes, dans lequel on fabrique d'abord un corps (2) avec une ouverture de passage (4) dotée d'un filetage intérieur (5), de préférence par pressage, en particulier par extrusion à froid, dans lequel on forme ensuite au moins une entaille (12) s'étendant en direction axiale, reliant l'une à l'autre plusieurs spires de filet (9) et traversant axialement plusieurs crêtes de filet (11), de telle manière que de la matière de crête de filet (10) soit refoulée dans des spires de filet (9) proches des crêtes de filet (11) pour produire le couple de maintien, **caractérisé en ce que**, pour produire l'entaille (12), on pousse un outil d'entaillage (19) axialement dans l'ouverture de passage (4) axialement à partir d'une deuxième extrémité (7) de celle-ci et on refoule ainsi axialement la matière de crête de filet (10).

9. Procédé selon la revendication 8, **caractérisé en ce que** l'outil d'entaillage (19) présente au moins une arête d'entaillage.

10. Procédé selon la revendication 9, **caractérisé en ce que** l'on utilise un outil d'entaillage (19), dans lequel un moyen de centrage (20), de préférence en forme de cône, est disposé axialement avant l'arête d'entaillage.

11. Procédé selon une des revendications 9 ou 10, **caractérisé en ce que** l'on utilise un outil d'entaillage (19) en forme d'hexagone pour produire six entailles (12) réparties uniformément sur la périphérie.
